# FASCICULE DE BREVET EUROPEEN

(11) **EP 2 651 271 B1**
(45) Date de publication et mention de la délivrance du brevet: **15.04.2015**
(21) Numéro de dépôt: 11817355.8
(22) Date de dépôt: 15.12.2011
(51) Int. Cl.: A47J 43/07, A47J 37/04, A47J 36/16, A47J 37/12

(54) **APPAREIL DE CUISSON D'ALIMENTS AVEC PALE DE REMUAGE**
KOCHVORRICHTUNG FÜR NAHRUNGSMITTEL MIT EINER RÜHRKLINGE
FOOD COOKING APPLIANCE COMPRISING A STIRRING BLADE

(30) Priorité: 17.12.2010 FR 1060732
(43) Date de publication de la demande: 23.10.2013
(73) Titulaire: SEB S.A., 69130 Ecully (FR)
(72) Inventeur: PAYEN, Jean-Marc, 21800 Quetigny (FR)
(74) Mandataire: Weber, Jean-François
(86) Numéro de dépôt international: PCT/FR2011/053010
(87) Numéro de publication internationale: WO 2012/080674

(56) Documents cités:
- WO-A1-2007/088279

## Description

### DOMAINE TECHNIQUE

La présente invention se rapporte au domaine technique général des appareils de chauffe ou de cuisson d'aliments, notamment à usage domestique, et en particulier des appareils de cuisson d'aliments en présence de matière grasse.

La présente invention concerne plus particulièrement un appareil de cuisson d'aliments comprenant d'une part un récipient destiné à contenir lesdits aliments et comportant une paroi latérale, et d'autre part une pale, lesdits récipient et pale étant conçus pour être animés d'un mouvement relatif de rotation selon un axe de rotation afin de remuer les aliments dans le récipient, ladite pale comprenant d'une part un moyen de soulèvement conformé pour soulever, sous l'effet du mouvement relatif de rotation, les aliments avec lesquels il rentre en contact, et d'autre part un moyen pour repousser les aliments en direction du moyen de soulèvement sous l'effet du mouvement relatif de rotation.

### TECHNIQUE ANTERIEURE

On connaît déjà une friteuse à cuisson sèche pourvue d'une cuve, d'une pale tournant au sein de la cuve ainsi que d'un circuit d'air chaud pour enduire des morceaux de pommes de terre d'une pellicule de matière grasse et cuire les morceaux de pommes de terre ainsi enduits dans un flux d'air chaud, de façon à obtenir des frites.

Un tel appareil donne tout à fait satisfaction, dans la mesure où il permet notamment d'obtenir automatiquement des frites avec une quantité très faible de matière grasse. Cet appareil connu peut toutefois encore être optimisé, notamment du point de vue de son aptitude à obtenir un bon résultat culinaire indépendamment de la quantité d'aliments à cuire.

En effet, l'appareil connu précité est conçu pour cuire une quantité prédéterminée d'aliments relativement importante (1 Kg ou 1,5 Kg par exemple). Dans le cas où l'utilisateur souhaite réaliser la cuisson de quantités d'aliments moindres, en vue par exemple de ne cuire qu'une seule portion de frites (ce qui peut représenter environ 150 à 200 g de frites), le brassage des aliments risque de ne pas être aussi homogène qu'il ne peut l'être en présence d'une quantité d'aliments plus importante.

En effet, en présence d'une petite quantité d'aliments, il existe un risque que la pale de l'appareil connu se contente simplement de pousser les aliments, sans véritablement les brasser de manière homogène. Cela entraîne les inconvénients suivants :
- les aliments ne sont pas enduits automatiquement d'huile de façon parfaitement homogène ;
- et ils ne sont pas cuits de façon uniforme.

Le résultat obtenu peut de ce fait s'avérer décevant par rapport à celui obtenu avec le même appareil mais pour une quantité plus importante d'aliments, proche de la quantité nominale recommandée.

Pour les mêmes raisons, cet appareil connu ne permet pas de réaliser de façon optimale certaines recettes nécessitant d'incorporer progressivement des ingrédients dans son récipient, dans la mesure où le caractère progressif de l'introduction des ingrédients dans le récipient ne permet pas d'atteindre immédiatement un volume suffisant d'aliment permettant un brassage pleinement efficace de ces derniers.

### EXPOSE DE L'INVENTION

Les objets assignés à l'invention visent en conséquence à porter remède aux différents inconvénients énumérés précédemment et à proposer un appareil de cuisson d'aliments capable de cuire des quantités variables d'aliments de façon aussi homogène et uniforme.

Un autre objet de l'invention vise à proposer un nouvel appareil de cuisson d'aliments de conception particulièrement simple.

Un autre objet de l'invention vise à proposer un nouvel appareil de cuisson d'aliments facile à réaliser.

Un autre objet de l'invention vise à proposer un nouvel appareil de cuisson d'aliments qui permet un brassage particulièrement efficace des aliments, même lorsque ces derniers sont présents en faible quantité.

Un autre objet de l'invention vise à proposer un nouvel appareil de cuisson d'aliments particulièrement compact.

Un autre objet de l'invention vise à proposer un nouvel appareil de cuisson d'aliments particulièrement fiable.

Un autre objet de l'invention vise à proposer un nouvel appareil de cuisson d'aliments particulièrement bon marché.

Les objets assignés à l'invention sont atteints à l'aide d'un appareil de cuisson d'aliments comprenant d'une part un récipient destiné à contenir lesdits aliments et comportant une paroi latérale, et d'autre part une pale, lesdits récipient et pale étant conçus pour être animés d'un mouvement relatif de rotation selon un axe de rotation afin de remuer les aliments dans le récipient, ladite pale comprenant d'une part un moyen de soulèvement conformé pour soulever, sous l'effet du mouvement relatif de rotation, les aliments avec lesquels il rentre en contact, et d'autre part un moyen pour repousser les aliments en direction du moyen de soulèvement sous l'effet du mouvement relatif de rotation, ledit appareil étant caractérisé en ce que ladite paroi latérale comprend au moins une section évasée, en ce que le moyen de soulèvement s'étend au moins en partie à l'aplomb de la section évasée pour soulever les aliments présents à l'aplomb de la section évasée et en ce que les projections respectives du moyen de soulèvement et de la section évasée dans un même plan parallèle à l'axe de rotation se superposent au moins en partie.

### DESCRIPTIF SOMMAIRE DES DESSINS

D'autres objets et avantages de l'invention apparaîtront plus en détails à l'aide de la description qui suit, en référence aux dessins annexés, donnés à titre d'exemples purement illustratifs et non limitatifs, dans lesquels :
- La figure 1 illustre, selon une vue générale en perspective, un exemple d'appareil de cuisson d'aliments conforme à l'invention.
- La figure 2 illustre, selon une vue éclatée, l'appareil de la figure 1 sans son récipient et sa pale.
- La figure 3 illustre, selon une vue générale en perspective, un récipient et une pale destinés à être montés dans l'appareil des figures 1 et 2.
- La figure 4 illustre, selon une vue de dessus, le récipient et la pale de la figure 3.
- La figure 5 illustre, selon une vue en coupe, le sous-ensemble récipient/pale des figures 3 et 4.
- La figure 6 illustre, selon une vue générale en perspective, le récipient des figures 3 à 5 pris seul.
- La figure 7 illustre, selon une vue de dessus, le récipient de la figure 6.
- La figure 8 illustre, selon une vue de côté, le récipient des figures 6 et 7.
- La figure 9 est un schéma visant à illustrer le principe de conception du récipient de l'appareil conforme à l'invention.

### MEILLEURE MANIERE DE REALISER L'INVENTION

L'appareil 1 de cuisson d'aliments illustré aux figures est de préférence un appareil domestique, c'est-à-dire qu'il est spécifiquement conçu et dimensionné pour un usage domestique. L'invention n'est cependant pas limitée au cadre familial, et concerne également les appareils semi-professionnels ou professionnels.

L'appareil 1 illustré aux figures est préférentiellement destiné à assurer la cuisson d'éléments particulaires, se présentant sous la forme de morceaux solides ou semi-solides, et présentant de préférence un caractère sensiblement polyédrique, tels que des morceaux de pommes de terre (en vue d'obtenir des frites par exemple), ou tels que des morceaux de légumes coupés (pour réaliser une poêlée de légumes par exemple). L'appareil 1 est préférentiellement destiné à assurer la cuisson des aliments en présence de matière grasse, mais la cuisson sans apport de matière grasse externe (autre que celle contenue dans les aliments eux-mêmes), voire même en l'absence de tout fluide de cuisson externe, fait partie intégrante du cadre de l'invention. L'appareil 1 illustré aux figures est conçu tout particulièrement pour assurer soit la réalisation de frites à partir de morceaux de pommes de terre, soit la réalisation de poêlées de légumes à partir de morceaux de légumes coupés. Les morceaux de pommes de terre ou de légumes pourront avoir été coupés manuellement par l'utilisateur, ou avoir été achetés déjà préparés dans le commerce, à l'état frais ou surgelé (précuits ou non).

L'invention n'est cependant pas limitée spécifiquement à l'élaboration de pommes de terre frites ou de poêlées de légumes. La friture, le rissolage, le rôtissage ou de manière générale le réchauffage de tout autre type d'aliments (incluant par exemple les viandes, poissons, crustacés, légumes et fruits) fait partie du cadre de l'invention.

De préférence, l'appareil 1 conforme à l'invention constitue une friteuse à cuisson sèche similaire à celle décrite dans les documents WO-2006/000699, WO-2006/000700 et WO-2007/088279, dont le contenu est incorporé par référence. Par « *cuisson sèche* », on désigne ici un mode de cuisson d'aliments sans immersion de ces derniers dans un bain d'huile ou de matière grasse, que cette immersion soit d'ailleurs temporaire ou constante pendant le cycle de cuisson. L'expression « *cuisson sèche »* désigne au contraire une cuisson dans laquelle les aliments sont certes *« mouillés »* par un médium de cuisson (de l'huile par exemple), mais sans pour autant être plongés ou baigner dans ledit médium. En cela, le principe de fonctionnement d'une friteuse à cuisson sèche diffère très nettement de celui d'une friteuse classique à bain d'huile. Dans le cas préférentiel où l'appareil 1 constitue une friteuse à cuisson sèche, son récipient 2 et sa pale 3 (qui seront décrits plus en détails ci-après) forment alors notamment un moyen pour enduire automatiquement les aliments d'une pellicule de matière grasse, de préférence sensiblement uniforme et homogène, par brassage desdits aliments avec de la matière grasse. A la fin de la cuisson par friture sèche, toute la matière grasse a été sensiblement consommée (pour enduire les aliments), de sorte qu'il ne reste sensiblement plus de matière grasse dans l'appareil.

L'appareil 1 conforme à l'invention comprend un récipient 2 destiné à contenir les aliments (non représentés). Le récipient 2 forme ainsi un moyen de réception conçu pour accueillir en son sein les aliments à cuire. De préférence, le récipient 2 est également conçu pour accueillir et contenir un médium de cuisson, se présentant par exemple sous forme liquide ou semi-liquide, tel que de la matière grasse (huile, beurre ou graisse). A cette fin, le récipient 2 est préférentiellement non ajouré, c'est-à-dire qu'il présente un caractère sensiblement plein (à la différence d'un panier), imperméable aux liquides, pour éviter toute fuite de matière grasse hors de son sein.

Le récipient 2 présente de préférence sensiblement une symétrie de révolution, selon un axe de révolution X-X', ledit axe de révolution X-X' s'étendant de préférence verticalement lorsque le récipient 2 est en position fonctionnelle.

Comme illustré aux figures, le récipient 2 comporte avantageusement un fond 2A qui est de préférence sensiblement plan, et s'étend de préférence sensiblement horizontalement, c'est-à-dire sensiblement perpendiculairement à l'axe de révolution X-X'. Par « *sensiblement horizontalement* », on désigne ici un fond 2A qui peut s'étendre soit de façon strictement horizontale, soit selon un profil proche de l'horizontale, par exemple légèrement bombé vers l'intérieur du récipient 2, pour limiter ou éviter les déformations lors du chauffage. Avantageusement, le fond 2A présente sensiblement une forme de disque de rayon R1, l'axe de symétrie dudit disque étant avantageusement confondu avec l'axe de révolution X-X', comme illustré aux figures. L'appareil 1 comporte en outre une paroi latérale 2B, de préférence de forme sensiblement annulaire. Cette paroi latérale 2B s'élève avantageusement à partir du fond 2A (et en l'espèce à la périphérie de ce dernier) entre un bord inférieur relié au fond 2A et un bord supérieur libre 2C délimitant une ouverture supérieure permettant l'introduction des aliments dans le récipient 2. La paroi latérale 2B présente ainsi avantageusement une forme annulaire, d'axe de symétrie X-X'. Avantageusement, le récipient 2 est formé d'une pièce d'un seul tenant, c'est-à-dire que la paroi latérale 2B vient de matière avec le fond 2A. Par exemple, le récipient 2B est réalisé par emboutissage d'un flan métallique.

L'appareil 1 conforme à l'invention comprend également une pale 3 disposée en l'espèce au sein du récipient 2, c'est-à-dire avantageusement montée, de préférence de façon amovible, dans le volume interne défini par le récipient 2 et donc délimité par le fond 2A et la paroi latérale 2B. Les récipient 2 et pale 3 sont conçus pour être animé d'un mouvement relatif de rotation selon un axe de rotation qui correspond de préférence à l'axe de révolution X-X', afin de remuer les aliments dans le récipient 2. Les configurations suivantes font donc pleinement partie du cadre de l'invention:
- le récipient 2 est immobile, tandis que la pale 3 tourne à l'intérieur du récipient 2, relativement à ce dernier ;
- la pale 3 est immobile, tandis que le récipient 2 tourne relativement à la pale 3 ;
- le récipient 2 et la pale 3 tournent tous les deux, mais à des vitesses de rotation différentes et/ou selon deux sens de rotation différents.

Sous l'effet de ce mouvement relatif de rotation, les aliments sont ainsi mis en mouvement au sein du récipient 2 en interagissant avec la pale 3, ce qui entraîne leur remuage au sein du récipient 2.

Avantageusement, l'appareil 1 comprend un corps principal 4 au sein duquel le récipient 2 est destiné à être monté, de préférence de manière amovible.

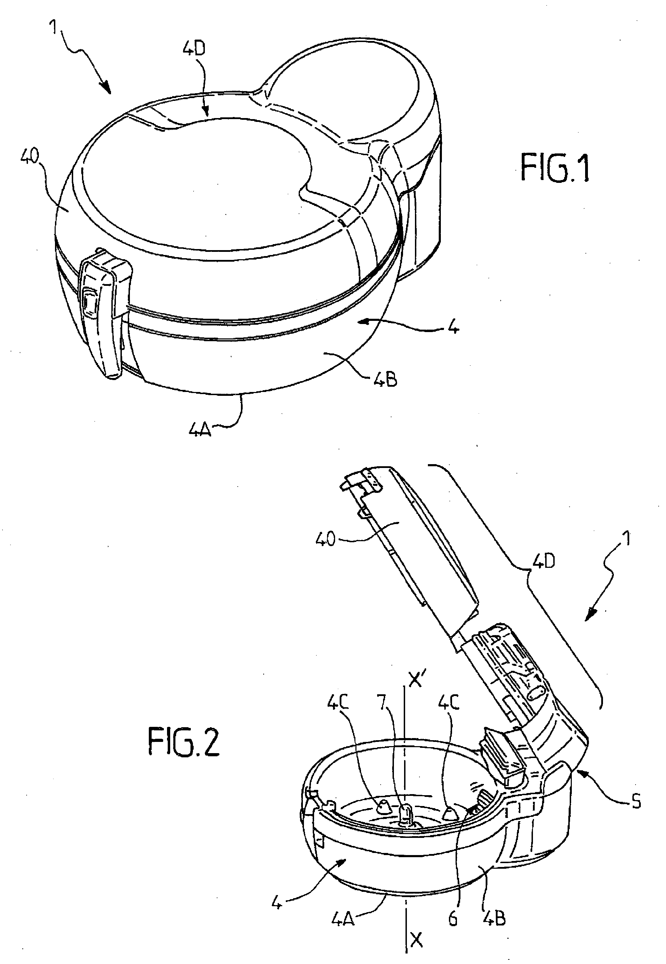

De façon préférentielle, comme illustré aux figures 1 et 2, le corps principal 4 comprend une embase 4A destinée à former le socle de l'appareil 1, et conformée à cet effet pour reposer de façon stable sur un plan ou un support. L'embase 4A définit ainsi une face d'appui, destinée à venir en contact avec ledit plan ou support, et une face opposée de réception du récipient 2, comprenant par exemple des plots de support 4C faisant saillie à partir de la face interne de l'embase 4A, et sur lesquels le récipient 2 est destiné à reposer. A partir de l'embase 4A et à la périphérie de cette dernière s'élève une jupe latérale 4B, réalisée par exemple en un matériau métallique ou plastique, et formant l'enveloppe externe latérale de l'appareil 1. Avantageusement, le corps principal 4 est également pourvu d'un couvercle 4D monté mobile entre d'une part une position de fermeture (illustrée à la figure 1) dans laquelle le couvercle 4 forme avec l'embase 4A et la jupe 4B une enceinte sensiblement fermée autour du récipient 2, et d'autre part une position d'ouverture (illustrée à la figure 2) autorisant l'introduction des aliments à cuire au sein du corps principal 4, dans le récipient 2. Comme illustré aux figures, le couvercle 4D est avantageusement monté à pivotement relativement à la jupe 4B, par exemple par l'intermédiaire d'une charnière 5 préférentiellement munie d'un ressort de torsion de façon que la position d'ouverture du couvercle 4D soit également une position de rappel stable. Avantageusement, le couvercle 4D comprend une partie transparente 40 montée de façon amovible sur le reste du couvercle 4D, afin d'en faciliter le nettoyage.

Le chauffage des aliments contenus dans le récipient 2 peut être réalisé par tout moyen de chauffe connu interne (c'est-à-dire intégré à l'appareil 1) ou externe (c'est-à-dire indépendant de l'appareil 1). Avantageusement, l'appareil 1 comporte, monté sur le corps principal 4 et donc intégré à l'appareil 1, un moyen de chauffe principal conçu pour générer un flux d'air chaud orienté vers l'intérieur du récipient 2. Par « *moyen de chauffe principal* », on désigne un moyen de chauffe qui assure à lui seul au moins l'essentiel de l'apport thermique permettant la cuisson. De façon préférentielle, le moyen de chauffe principal est conçu et agencé pour assurer la totalité dudit apport thermique. De préférence, le moyen de chauffe principal comprend un ventilateur générant un flux aéraulique en aspirant de l'air au sein du corps principal 4 par au moins une ouïe d'entrée 6 (visible sur la figure 2) ménagée de préférence latéralement relativement au récipient 2, et en refoulant cet air, préalablement chauffée (par exemple à l'aide de résistances électriques chauffantes), par un dispositif de canalisation interne débouchant en direction et au-dessus des aliments présents dans le récipient 2. Un tel circuit de chauffe par flux forcé d'air chaud est décrit en détails dans le document WO-2006/000700, dont le contenu est incorporé par référence. Bien entendu, l'invention n'est absolument pas limitée à un mode de chauffage particulier, et il est notamment tout à fait envisageable que le chauffage et la cuisson des aliments soient réalisés à l'aide d'un chauffage par rayonnement infrarouge, éventuellement combiné avec un flux d'air forcé.

Dans les variantes illustrées aux figures, et qui correspondent à un mode préférentiel de réalisation de l'invention, le récipient 2 est monté immobile au sein du corps principal 4, tandis que la pale 3 est montée mobile en rotation, de préférence selon l'axe X-X', relativement au récipient 2 et au corps principal 4. En d'autres termes, selon ce mode préférentiel de réalisation, le récipient 2 est fixe tandis que la pale 3 tourne au sein du récipient 2. De façon préférentielle, afin de réaliser ce déplacement relatif du récipient 2 et de la pale 3, un moyen d'entraînement (non visible), tel qu'un moteur électrique, est disposé au sein de l'embase 4B. Ce moyen d'entraînement entraîne en rotation un arbre 7 qui fait saillie verticalement, coaxialement à l'axe X-X', de l'embase 4A. Un orifice correspondant 8 est dans ce cas ménagé sensiblement au centre du fond 2A du récipient 2, afin de permettre le passage de l'arbre 7 à travers le fond 2A. La pale 3 comprend quant à elle dans ce cas un moyeu 9 destiné à être emmanché, de préférence de façon amovible, sur l'arbre 7, de façon que ce dernier puisse ainsi entraîner en rotation, autour de l'axe X-X', la pale 4 au sein du récipient 2, lequel reste avantageusement immobile. Dans le mode de réalisation illustré aux figures, le moyeu 9 est disposé de façon sensiblement coaxiale à l'axe de révolution X-X' du récipient 2 et à l'arbre 7.

La paroi latérale 2B comprend au moins une section évasée 20 qui s'étend avantageusement (et en l'espèce directement) à partir du fond 2A, à la périphérie de ce dernier. Comme illustré aux figures, la section évasée 20 s'évase à partir du fond 2A, c'est-à-dire qu'elle s'étend entre un premier bord 20A raccordé au fond 2A et dont le rayon correspondant sensiblement au rayon R1 du disque formant le fond 2A et un deuxième bord 20B dont le rayon R2 est supérieur au rayon R1, compte tenu du fait que la section 20 est évasée, c'est-à-dire va en s'élargissant progressivement à partir du fond 2A vers le haut. Le deuxième bord 20B précité de la section évasée 20 peut constituer le bord libre 2C, ce qui signifie dans ce cas que la paroi latérale 2B est sensiblement intégralement constituée par la section évasée 20. De préférence, le deuxième bord 20B en question n'est pas un bord libre, la paroi latérale 2B comprenant par exemple également une section terminale 21, par exemple de forme sensiblement cylindrique (c'est-à-dire de rayon sensiblement constant, alors que le rayon de la section évasée 20 va en s'agrandissant progressivement) qui s'étend (ou plus précisément s'élève) à partir de la section évasée 20 (en l'espèce à partir du deuxième bord 20B) jusqu'au bord libre 2C, lequel peut être un bord roulé ou replié. Dans le mode de réalisation illustré aux figures, la section évasée 20 s'étend directement à partir du fond 2A. Il est cependant tout à fait envisageable, sans pour autant sortir du cadre de l'invention, que la section évasée 20 ne s'étende pas directement à partir du fond 2A. Dans ce cas, la paroi latérale 2B pourrait par exemple comprendre une première section cylindrique (tubulaire) sensiblement non évasée dont l'une des extrémités est raccordée au fond 2A tandis que son autre extrémité est raccordée au premier bord 20A de la section évasée 20.

Au sens de l'invention, la section évasée 20 constitue, comme illustré aux figures, une portion de la paroi latérale 2B, voire l'intégralité de la paroi elle-même, et est donc distincte de la zone de jonction, située à l'interface entre la paroi latérale 2B (et de préférence la section évasée 20) et le fond 2A, qui assure le raccordement de la paroi latérale 2B (et de préférence de la section évasée 20) au fond 2A. Cette zone de jonction présente une hauteur sensiblement insignifiante en regard de la dimension du fond 2A et/ou du niveau (hauteur) atteint par les aliments dans le récipient 2 lors d'une utilisation normale (c'est-à-dire avec une quantité d'aliments correspond à au moins environ une portion). Avantageusement, cette jonction entre le fond 2A et la paroi latérale 2B (de préférence la section évasée 20) présente elle-même une courbure sensiblement régulière, c'est-à-dire que le raccordement de la paroi latérale 2B (de préférence la section évasée 20) au fond 2A s'effectue de façon progressive, sans angle vif qui pourrait favoriser le coincement des aliments. Un tel raccordement progressif est aisément obtenu dans le cadre d'un procédé de fabrication du récipient 2 par emboutissage d'un flan métallique par exemple. La pale 3 se trouve avantageusement au-dessus de cette zone de jonction, et plus précisément à l'aplomb (localement du moins) de cette zone de jonction, au droit de cette dernière (selon la direction verticale matérialisée par l'axe X-X').

De préférence, la section évasée 20 s'étend, de préférence à partir du fond 2A, sur au moins une portion significative de la hauteur H de la paroi latérale 2B, ladite hauteur H correspondant à la distance verticale (selon l'axe de révolution X-X') séparant le fond 2A du bord libre 2C. Avantageusement, la section évasée 20 s'étend ainsi à partir du fond 2A sur au moins le tiers de la hauteur H de la paroi latérale 2B, et de préférence sur au moins la majorité de ladite hauteur H de la paroi latérale 2B. Dans le mode de réalisation préférentiel illustré aux figures, la section évasée 20 constitue d'ailleurs l'essentiel de la paroi latérale 2B.

Comme illustré aux figures, la section évasée 20 présente avantageusement une forme sensiblement courbe, c'est-à-dire qu'elle présente un profil incurvé, cintré. De préférence, ladite section évasée 20 présente un rayon de courbure R3, c'est-à-dire que la section évasée 20 présente, en section transversale (c'est-à-dire dans un plan perpendiculaire au fond 2A et passant par l'axe de révolution X-X'), un profil sensiblement en arc de cercle de rayon R3. Il est cependant tout à fait envisageable que la section évasée 20 présente non pas une forme courbe avec un rayon de courbure, mais plutôt une forme tronconique par exemple, ou toute autre forme évasée, étant entendu que le recours à une forme sensiblement concave (vue de l'intérieur du récipient 2) est préférée.

Bien entendu, le caractère évasé de la section évasée 20 est relativement marqué, dans le sens où la section évasée ne présente pas une légère dépouille facilitant la fabrication du récipient 2 (par emboutissage ou moulage par exemple) mais une dépouille beaucoup plus importante, et en tous les cas supérieure à la dépouille minimale requise pour la fabrication du récipient 2.

A titre de variantes de réalisation, les configurations alternatives suivantes (liste non exhaustive) sont par exemple envisageables :
- La section évasée 20 est directement raccordée au fond et elle est formée d'une surface tronconique inclinée sensiblement à 45° par rapport au fond 2A ;
- La section évasée 20 est directement raccordée et elle est formée par la succession d'une première surface tronconique inclinée sensiblement à 30° par rapport au fond 2A et d'une deuxième surface tronconique inclinée sensiblement à 60° par rapport au fond 2A.

Comme illustré aux figures, la pale 3 comprend un moyen de soulèvement 3A conformé pour soulever, sous l'effet du mouvement relatif de rotation, les aliments avec lesquels il rentre en contact. Ainsi, le moyen de soulèvement 3A est conçu pour exercer un effort de poussée avec une composante verticale (c'est-à-dire en l'espèce parallèle à l'axe de révolution X-X') sur les aliments, cet effort de poussée à composante verticale étant obtenu de préférence grâce à une conformation particulière du moyen de soulèvement 3A qui permet de convertir le mouvement relatif de rotation en mouvement de soulèvement des aliments. Comme illustré aux figures, le moyen de soulèvement 3A est positionné sensiblement en regard de la section évasée 20, c'est-à-dire qu'il se trouve au droit de ladite section évasée 20, en face et à proximité immédiate de cette dernière. Plus précisément, le moyen de soulèvement 3A s'étend au moins en partie à l'aplomb de la section évasée 20 pour soulever (sous l'effet du mouvement relatif de rotation comme évoqué ci-dessus) les aliments présents dans le récipient 2 au niveau de ladite section évasée 20, et plus précisément les aliments présents à l'aplomb de la section évasée. Ainsi, le moyen de soulèvement 3A s'étend au moins partiellement au-dessus (en considération de la direction verticale matérialisée en l'espèce par l'axe X-X') de la section évasée 20, c'est-à-dire qu'au moins sa bordure latérale périphérique (matérialisée en l'espèce par le bord extérieur supérieur 31) s'étend au moins en partie à l'aplomb de la section évasée 20. De préférence, le moyen de soulèvement 3A s'étend à l'aplomb de la section évasée 20 sur au moins sensiblement un tiers de sa surface faisant face au récipient 2. De façon encore plus préférentielle, le moyen de soulèvement 3A s'étend sensiblement majoritairement à l'aplomb de la section évasée 20, c'est-à-dire que seule une fraction minoritaire, voire inexistante (dans le cas où le moyen de soulèvement 3A s'étend sensiblement complètement à l'aplomb de la section évasée 20), du moyen de soulèvement 3A, s'étend au-dessus du fond 2A, tandis qu'une fraction majoritaire, voire sensiblement la totalité, du moyen de soulèvement 3A s'étend au-dessus de la section évasée 20.

En d'autres termes, la projection du moyen de soulèvement 3A dans un plan perpendiculaire à l'axe de rotation de la pale 3 relativement au récipient 2 (c'est à dire un plan qui est avantageusement horizontal dans le cas où l'axe de rotation en question est confondu avec l'axe X-X' et que ce dernier est vertical) se confond au moins en partie (et de préférence sur au moins sensiblement un tiers de sa surface, et de façon encore plus préférentielle sur au moins la majorité de sa surface) avec la projection de la section évasée 20 dans ce même plan.

Avantageusement, et comme illustré aux figures, le moyen de soulèvement 3A s'élève au moins partiellement en surplomb au-dessus de la section évasée 20. Dans ce cas, le moyen de soulèvement 3A est incliné de façon que son bord extérieur supérieur 31 soit la partie du moyen de soulèvement 3A qui est la plus éloignée de l'axe X-X'. En d'autres termes, la face du moyen de soulèvement 3A qui se trouve en vis-à-vis du récipient 2 est inclinée vers l'extérieur du récipient 2.

Par ailleurs, et comme illustré aux figures, les projections respectives du moyen de soulèvement 3A et de la section évasée 20 dans un même plan parallèle à l'axe de rotation X-X' se superposent au moins en partie. Il existe donc au moins une droite fictive qui s'étend radialement en considération de l'axe de rotation X-X' tout en étant sécante avec à la fois le moyen de soulèvement 3A et la section évasée 20. En d'autres termes, le moyen de soulèvement 3A et la section évasée 20 coupent tous deux au moins un même plan perpendiculaire à l'axe de rotation X-X'. Cela signifie que le moyen de soulèvement 3A fait au moins partiellement face à la section évasée 20 selon la direction radiale (par rapport à l'axe X-X'), ce qui lui permet, en combinaison avec le fait qu'il s'étend au moins en partie à l'aplomb de ladite section évasée 20 (c'est-à-dire au-dessus de cette dernière selon la direction verticale), d'opérer un remuage particulièrement efficace des aliments pour des quantités plus ou moins importantes de ces derniers.

Ainsi, comme illustré aux figures, la partie périphérique (du point de vue radial) du moyen de soulèvement 3A s'étend au moins en partie au-dessus de la section évasée 20, tandis que la partie la plus basse (point bas 30A) du moyen de soulèvement 3A est située à une hauteur (prise selon la direction verticale matérialisée par l'axe X-X') par rapport au fond 2A qui est inférieure à la hauteur du deuxième bord 20B de la section évasée 20.

La partie inférieure du moyen de soulèvement est donc apte à interférer avec une petite quantité d'aliments pour les soulever, tandis que sa partie supérieure permet de traiter des quantités d'aliments plus importantes. L'appareil 1 peut ainsi fonctionner de manière satisfaisante non seulement pour des quantités d'aliments correspondant à la capacité nominale de l'appareil, mais aussi avec des quantités significativement réduites.

Avantageusement, le moyen de soulèvement 3A est conçu pour assurer successivement le soulèvement des aliments dans le secteur de la section évasée 20, puis leur basculement vers le centre du récipient 2. Dans le mode de réalisation illustré aux figures, le moyen de soulèvement 3A, qui fait partie de la pale 3, vient ainsi balayer, sous l'effet du mouvement de rotation de la pale 3, la section évasée 20, en soulevant au passage les aliments qu'il rencontre sur sa trajectoire, et en faisant avantageusement basculer lesdits aliments ainsi soulevés vers le centre du récipient 2. Avantageusement, le moyen de soulèvement 3A comporte un pan incliné 30 conçu pour que les aliments glissent dessus sous l'effet du mouvement relatif de rotation. En d'autres termes, le pan incliné 30 forme une pente apte à soulever les aliments sous l'effet du mouvement relatif de rotation, par effet de rampe. La surface du pan incliné 30 joue ainsi le rôle d'un coin qui vient décoller de la paroi du récipient 2 les aliments croisés sur sa trajectoire. Le pan incliné 30 s'étend avantageusement entre un point bas 30A et un point haut 30B, la distance verticale séparant les points bas 30A et haut 30B correspondant à la hauteur h1 du moyen de soulèvement 3A. Cette hauteur h1du moyen de soulèvement représente une fraction significative de la hauteur h2 de la section évasée 20, et de préférence représente au moins la majorité de ladite hauteur h2 de la section évasée 20. Le pan incliné 3A est en outre délimité extérieurement par le bord extérieur supérieur 31.

Le moyen de soulèvement 3A peut ainsi balayer la section évasée 20 sur la majeure partie de la hauteur h2 de cette dernière, ce qui contribue, en coopération avec la forme évasée de la section évasée 20, à un excellent brassage des aliments, même lorsque ces derniers sont en petite quantité.

Afin d'optimiser encore ce brassage, en favorisant le balayage efficace de la surface interne du récipient 2 par la pale 3, cette dernière (en ce compris le moyen de soulèvement 3A) présente avantageusement une forme qui suit sensiblement le contour intérieur du récipient 2. Le moyen de soulèvement 3A épouse ainsi avantageusement la forme de la section évasée 20, c'est-à-dire qu'il présente un contour complémentaire au profil de ladite section évasée 20.

Afin d'augmenter encore l'efficacité du brassage opéré par le mouvement relatif de la pale 3 et du récipient 2, le pan incliné 30 du moyen de soulèvement 3A présente avantageusement une diminution de son aire en direction de l'arrière relativement au sens de déplacement de la pale 3 par rapport au récipient 2, pour favoriser le basculement vers l'intérieur du récipient 2 des aliments glissants sur et le long dudit pan incliné 30. En d'autres termes, le pan incliné 30 rétrécit vers l'arrière, de façon à soulever en premier lieu les aliments, grâce à sa forme de rampe inclinée, puis à se dérober progressivement à l'appui des aliments, jusqu'à les faire basculer vers l'intérieur.

Avantageusement, l'appareil 1 comprend également une protubérance 10 qui fait saillie de la paroi latérale 2B vers l'intérieur du récipient 2, ladite protubérance 10 s'étendant au moins en partie en regard de la section évasée 20, c'est-à-dire en vis-à-vis de cette dernière, et étant destinée à entrer en contact avec au moins une partie des aliments, de façon à prévenir l'accumulation contre la pale 3 d'un bloc d'aliments qui ne se déplacent sensiblement pas les uns relativement aux autres, et qui de ce fait ne sont pas brassés. La protubérance 10 est avantageusement montée au sein de l'appareil 1 de préférence directement sur le récipient 2, pour que la pale 3 soit mobile relativement à la protubérance 10 sous l'effet du mouvement relatif de rotation, ladite protubérance 10 étant ainsi positionnée pour entrer en contact avec au moins une partie des aliments.

En d'autres termes, la protubérance 10 forme un obstacle placé sensiblement sur la trajectoire des aliments poussés par la pale 3, pour empêcher un mouvement global d'un bloc d'aliments compact.

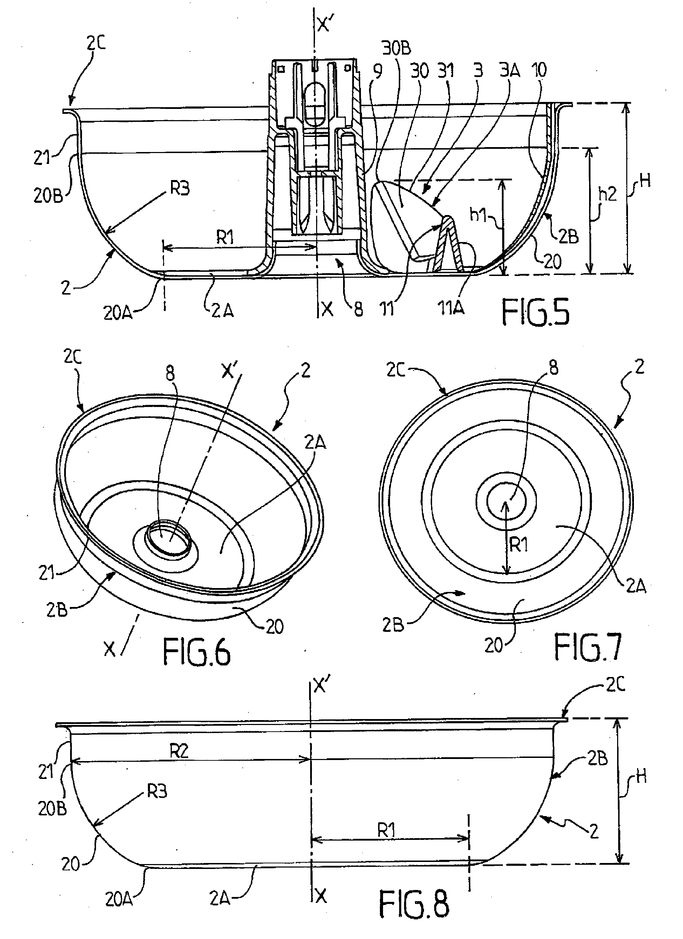

Avantageusement, la protubérance 10 présente, comme illustré aux figures, une forme sensiblement allongée et s'étend, selon une direction sensiblement verticale, sur au moins la majorité de la hauteur H de la paroi latérale 2B. En particulier, la protubérance 10 se présente avantageusement sous la forme d'une patte qui s'étend verticalement, en épousant le contour de l'intérieur du récipient 2, sensiblement à partir du bord libre 2C jusque sensiblement au premier bord 20A marquant l'interface de raccordement entre la section évasée 20 et le fond 2A. De préférence, l'épaisseur de la patte formant protubérance 10 va en s'accroissant progressivement du bas vers le haut, comme cela est notamment perceptible à la figure 5. Bien entendu, le moyen de soulèvement 3A est conçu dans ce cas pour se trouver à une distance suffisante de la paroi intérieure du récipient 2, de façon à venir balayer la surface supérieure exposée de la protubérance 10 sans venir buter contre ladite protubérance 10 au cours de sa trajectoire de rotation, en passant localement au-dessus cette dernière.

Il est par ailleurs tout à fait envisageable que l'appareil 1 comprenne une pluralité de protubérances 10, de préférence identiques les unes aux autres et disposées de préférence régulièrement à l'intérieur du récipient 2. Par exemple l'appareil 1 peut avantageusement comprendre deux protubérances disposées de façon diamétralement opposée relativement à l'axe X-X', lesdites protubérances étant de préférence identiques à celle illustrée aux figures.

Avantageusement, la paie 3 comprend également un moyen 11 pour repousser les aliments en direction du moyen de soulèvement 3A, sous l'effet du mouvement relatif de rotation. Le moyen 11 pour repousser les aliments est ainsi conçu pour repousser les aliments en direction de la périphérie du récipient 2, vers la section évasée 20 au niveau de laquelle est positionné le moyen de soulèvement 3A. En d'autres termes, le moyen 11 pour repousser les aliments est conformé pour déplacer de façon centrifuge les aliments en direction de la paroi latérale 2B, de manière à diriger lesdits aliments vers le moyen de soulèvement 3A afin que les aliments en question soient soumis à l'action de soulèvement dudit moyen de soulèvement 3A. A cette fin, le moyen 11 pour repousser les aliments en direction du moyen de soulèvement 3A comporte de préférence un déflecteur frontal 11 A orienté pour exercer un effort de poussée sensiblement horizontal sur les aliments, c'est-à-dire selon une trajectoire tournant autour de l'axe X-X', dans un plan parallèle au fond 2A. Afin de favoriser l'effet de déplacement centrifuge des aliments, le déflecteur frontal 11A présente avantageusement, selon la direction verticale définie par l'axe X-X', une hauteur suffisante pour sensiblement empêcher les aliments (lorsqu'ils sont en petite quantité) de passer par-dessus lui.

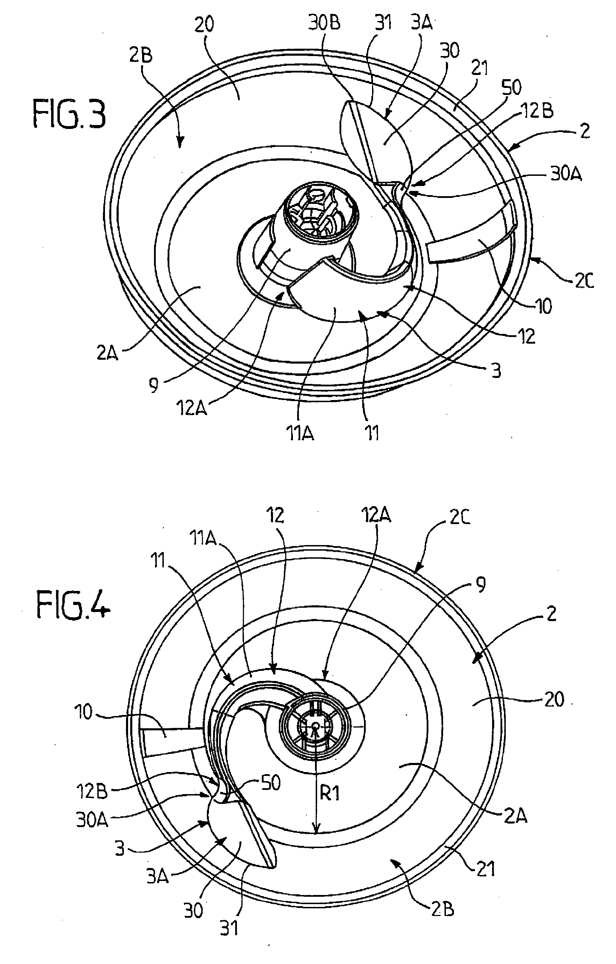

De préférence, tel que cela est illustré aux figures, la projection du déflecteur frontal 11A selon un plan horizontal (perpendiculaire à l'axe X-X') présente un profil sensiblement courbé vers l'arrière en considération du sens de mouvement de la pale 3 relativement au récipient 2. En d'autres termes, le déflecteur frontal 11A présente un bord d'attaque qui est convexe pour amener les aliments vers la périphérie du récipient 2. De préférence, le déflecteur frontal 11A présente un bord d'attaque fuyant en direction du moyen de soulèvement 3A, c'est-à-dire, dans les exemples illustrés aux figures, un profil fuyant vers l'arrière (en considération du sens de rotation de la pale 3 relativement au récipient 2) et la périphérie du récipient 2, par exemple en forme de volute, tel que cela est particulièrement visible sur la figure 4. La courbure vers l'arrière du déflecteur frontal 11A est ainsi conçue pour d'une part favoriser un déplacement centrifuge des aliments le long du déflecteur 11A lorsque ce dernier, mis en rotation avec la pale 3, vient impacter les aliments, et d'autre part éviter de créer un paquet d'aliments tournant de concert avec la pale 3 selon une trajectoire sensiblement purement circulaire, sans déplacement centrifuge concomitant.

Ainsi, le moyen 11 pour repousser les aliments en direction du moyen de soulèvement 3A est avantageusement situé, en considération du sens de déplacement de la pale 3, devant le moyen de soulèvement 3A. En d'autres termes, le déflecteur frontal 11A est situé à l'amont du moyen de soulèvement 3A en considération du sens du flux d'aliments venant en collision avec la pale 3 (vu de cette dernière), lors du déplacement en rotation de la pale 3, au sein des aliments, dans le récipient 2.

Les aliments sont donc avantageusement soumis en premier lieu à l'action de déplacement centrifuge du déflecteur frontal 11 A, lequel déplace les aliments vers la périphérie du récipient 2 jusqu'au pan incliné 30 qui soulève les aliments. Ces derniers basculent ensuite vers le centre du récipient 2, ce qui procure un effet de brassage optimal.

Avantageusement, la pale 3 comprend un moyeu 9 ainsi qu'au moins un premier bras 12 s'étendant entre une première extrémité 12A solidaire du moyeu 9 et une deuxième extrémité 12B solidaire du moyen de soulèvement 3A. Le premier bras 12 assure ainsi la transmission, au moyen de soulèvement 3A, du mouvement de rotation conféré au moyeu 9 par l'arbre 7.

De préférence et comme illustré aux figures, la pale 3 comprend un volet 50 interposé entre le premier bras 12 et le moyen de soulèvement 3A, afin d'éviter la rétention éventuelle, à la jonction entre le premier bras 12 et le moyen de soulèvement 3A, d'aliments de petite taille. Le volet 50 joue ainsi un rôle de déflecteur améliorant si nécessaire la canalisation des aliments vers la partie active du moyen de soulèvement 3A.

Avantageusement, le moyen 11 pour repousser les aliments en direction du moyen de soulèvement 3A est solidaire du premier bras 12, et est interposé entre lesdites première et deuxième extrémités 12A, 12B. Dans ce cas, le déflecteur frontal 11A est avantageusement solidaire du premier bras 12 et s'étend entre lesdites première et deuxième extrémités 12A, 12B. La deuxième extrémité 12B du premier bras 12 est avantageusement disposée vers la périphérie du fond 2A, de façon que le premier bras 12 surplombe le fond 2A et puisse ainsi balayer ce dernier. Le premier bras 12 ne s'étend cependant sensiblement pas au-delà du fond 2A, contrairement au moyen de soulèvement 3A qui est lui connecté à la deuxième extrémité 12B et s'étend en regard de la section évasée 20, comme exposé précédemment.

De manière préférentielle, le moyen 11 pour repousser les aliments est directement intégré au premier bras 12, et vient préférentiellement de matière avec ce dernier, c'est-à-dire que le premier bras 12 est dans ce cas conformé pour constituer par lui-même le déflecteur frontal 11 A. Avantageusement, la pale 3. se présente sous la forme d'une pièce d'un seul tenant, réalisée par exemple en matière plastique, et comportant le moyeu 9, le premier bras 12 en forme de volute étant pourvu à son extrémité extérieure d'un aileron formant le pan incliné 30. Avantageusement, l'aire du déflecteur frontal 11A diminue de la première extrémité 12A vers la deuxième extrémité 12B, c'est-à-dire en l'espèce que le déflecteur frontal 11A va en rétrécissant du moyeu 9 vers le moyen de soulèvement 3A. Ceci permet notamment de concentrer les aliments vers le moyen de soulèvement 3A, tout en favorisant leur basculement vers l'intérieur du récipient 2 à partir dudit moyen de basculement 3A.

De manière générale, la pale 3 est avantageusement conçue conformément à l'enseignement du document WO-2007/088279, dont le contenu est incorporé par référence.

Un exemple spécifique de réalisation va maintenant être décrit. Dans cet exemple, le récipient 2 est conçu pour présenter une contenance maximale de 600g de frites (soit l'équivalent d'environ quatre portions) tout en étant capable d'obtenir un bon résultat de cuisson avec une quantité minimale de frites d'environ 150g (soit environ une portion).

Pour cela, le rayon R1 du disque formant le fond 2A est sensiblement égal à 70 mm, tandis que le rayon de courbure R3 de la section évasée 20 est sensiblement égal à 60 mm, la hauteur H de la paroi latérale 2B étant quant à elle sensiblement égale à 75 mm.

Comme illustré aux figures, le profil en arc de cercle (de rayon de courbure R3) de la section évasée 20 vient de préférence sensiblement tangenter le plan horizontal au niveau du raccordement avec le fond 2A, de manière à opérer un raccordement progressif avec ce dernier. Pour la même raison, le profil en arc de cercle de la section évasée 20 vient tangenter sensiblement la direction verticale au niveau du deuxième bord 2B, afin d'opérer un raccordement progressif avec la section terminale 21 de forme cylindrique.

Le récipient 2 conforme à cet exemple de réalisation a été utilisé pour réaliser trois plats de frites, à partir de morceaux de pommes de terre crues, lesdits plats ne se distinguant que par leur quantité qui était respectivement de 150 g, 300 g et 600 g.

Des résultats similaires d'un point de vue qualitatif ont été obtenus, avec ce même récipient 2, pour chacune de ces trois quantités différentes. Les frites ont été ainsi enduites d'huile et cuites de manière parfaitement homogène et uniforme, quelle que soit la quantité (150 g, 300 g ou 600 g) introduite dans le récipient 2.

L'obtention de ce bon résultat de cuisson, même en présence d'une quantité faible d'aliments (en l'espèce quatre fois inférieure à la quantité nominale) s'explique par le fait que cette petite quantité est néanmoins suffisamment importante par rapport à l'aire du fond 2A pour se retrouver entraînée, sous l'action de la pale 3, vers et sur la section évasée 20, laquelle favorise le brassage des aliments. En effet, la présence de la section évasée 20 permet aux petites quantités de pouvoir être traitées dans un plus petit volume d'accueil que celui dans lequel elles se trouvaient avec les récipients de l'art antérieur, ce qui leur permet d'être remuées beaucoup plus efficacement. Le recours à une partie plane centrale (le fond 2A) entouré par une partie incurvée (la section évasée 20) permet en d'autres termes de répartir les petites quantités sur une surface plus faible mais sur une hauteur plus importante, ce qui augmente l'efficacité de remuage de la pale.

L'invention permet ainsi, grâce à des mesures techniques extrêmement simples qui consistent notamment à simplement modifier la géométrie de la paroi latérale 2B du récipient 2, l'obtention d'un appareil 1 procurant un excellent résultat de cuisson pour une gamme de quantités extrêmement large (en l'espèce du simple au quadruple pour l'exemple exposé ci-avant) alors que ceci était impossible à obtenir pour une cuve de même capacité nominale mais présentant une paroi latérale uniquement cylindrique comme dans l'art antérieur.

Bien entendu, l'invention n'est absolument pas limitée à un rayon de courbure R3 spécifique de la section évasée 20, étant entendu qu'il a toutefois été noté qu'un rayon de courbure R3 au moins égal à la moitié du rayon R1 du disque formant le fond 2A donne de très bons résultats.

Ainsi, pour un appareil 1 constituant une friteuse à cuisson sèche du genre de celle décrite dans le document WO-2006/000699, il a été établi que de bons résultats sont obtenus lorsque le rayon R1 du disque formant le fond 2A est compris entre 50 et 150mm, tandis que le rayon de courbure R3 est au moins égal à 40mm. L'invention a en particulier permis de mettre en évidence l'importance d'au moins deux paramètres géométriques du récipient 2 pour permettre à ce dernier de traiter efficacement différentes quantités d'aliments, savoir :
- le rayon R1 du disque formant le fond 2A, ce rayon R1 correspondant avantageusement à la distance approximative séparant, dans le plan horizontal, les première et deuxième extrémités 12A, 12B du bras 12 de la pale 3 entre lesquelles s'étend le déflecteur frontal 11 A,
- et le rayon de courbure R3 de la section évasée 20 (lorsque cette dernière présente un tel rayon de courbure, ce qui n'est pas forcément nécessaire puisqu'elle peut être par exemple de forme tronconique), ledit rayon de courbure R3 permettant de régler, pour un diamètre hors-tout donné du récipient 2, la quantité minimale d'aliments que ce dernier peut traiter de manière optimale.

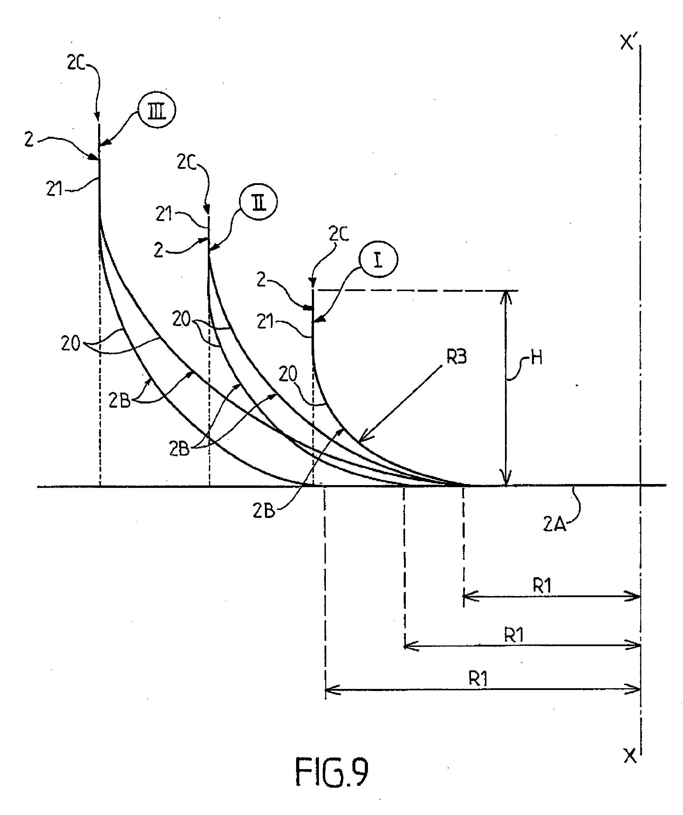

La figure 9 illustre ainsi différents exemples de récipients 2 conforme à l'invention. Dans un premier exemple I, le récipient 2 comprend un fond 2A de rayon R1, une section évasée 1 avec un rayon de courbure R3 qui s'étend à partir du fond 2A et qui se prolonge par une section terminale cylindrique 21. Sur cette même figure 9 est représenté l'exemple II, qui se décline en deux variantes : l'une selon laquelle la section évasée 20 s'étend à partir d'un fond 2A qui présente un rayon R1 identique à celui de l'exemple I, et l'autre selon laquelle la section évasée 20 s'étend à partir d'un fond 2A qui présente un rayon R1 supérieur à celui du fond 2A de l'exemple I.

Enfin, l'exemple III de la figure 9 prévoit lui-même deux sous-variantes : une selon laquelle le fond 2A présente un rayon R1 identique à celui de l'exemple I, et l'autre selon laquelle le rayon R1 du fond 2A est beaucoup plus important que celui de l'exemple I.

En jouant de cette façon sur la dimension du fond 2A et sur le rayon de courbure R3 (ou de manière plus générale sur l'incurvation) de la section évasée 20, il est ainsi possible de régler facilement les quantités minimale et maximale d'aliments que l'appareil 1 pourra traiter avec la même efficacité et uniformité de cuisson.

### POSSIBILITE D'APPLICATION INDUSTRIELLE

L'invention trouve son application industrielle dans la conception, la fabrication et l'utilisation d'appareils de cuisson d'aliments.

## Revendications

1. Appareil (1) de cuisson d'aliments comprenant d'une part un récipient (2) destiné à contenir lesdits aliments et comportant une paroi latérale (2B), et d'autre part une pale (3), lesdits récipient (2) et pale (3) étant conçus pour être animés d'un mouvement relatif de rotation selon un axe de rotation (X-X') afin de remuer les aliments dans le récipient (2), ladite pale (3) comprenant d'une part un moyen de soulèvement (3A) conformé pour soulever, sous l'effet du mouvement relatif de rotation, les aliments avec lesquels il rentre en contact et d'autre part un moyen (11) pour repousser les aliments en direction du moyen de soulèvement (3A) sous l'effet du mouvement relatif de rotation, ledit appareil (1) étant **caractérisé en ce que** ladite paroi latérale (2B) comprend au moins une section évasée (20), **en ce que** le moyen de soulèvement (3A) s'étend au moins en partie à l'aplomb de la section évasée pour soulever les aliments présents à l'aplomb de la section évasée (20) et **en ce que** les projections respectives du moyen de soulèvement (3A) et de la section évasée (20) dans un même plan parallèle à l'axe de rotation (X-X') se superposent au moins en partie.

2. Appareil (1) selon la revendication 1 **caractérisé en ce que** le moyen de soulèvement (3A) s'étend à l'aplomb de la section évasée (20) sur au moins sensiblement un tiers de sa surface faisant face au récipient (2), ledit moyen de soulèvement (3A) s'étendant de préférence sensiblement majoritairement à l'aplomb de la section évasée.

3. Appareil (1) selon l'une des revendications 1 et 2 **caractérisé en ce que** le moyen de soulèvement (3A) s'élève au moins partiellement en surplomb au-dessus de la section évasée (20).

4. Appareil (1) selon l'une des revendications 1 à 3 **caractérisé en ce que** ladite section évasée (20) s'étend sur au moins la majorité de la hauteur (H) de la paroi latérale (2B).

5. Appareil (1) selon l'une des revendications 1 à 4 **caractérisé en ce que** ladite section évasée (20) présente une forme sensiblement courbe.

6. Appareil (1) selon l'une des revendications 1 à 5 **caractérisé en ce que** le récipient (2) comporte un fond (2A) à partir duquel s'élève la paroi latérale (2B), ledit fond (2A) s'étendant de préférence sensiblement horizontalement, la section évasée (20) s'étendant à partir du fond (2A), la jonction entre lesdits fond (2A) et section évasée (20) présentant une courbure sensiblement régulière, ladite paroi latérale (2B) comprenant préférentiellement une section terminale (21) de forme sensiblement cylindrique qui s'étend à partir de la section évasée (20) jusqu'à un bord libre (2C).

7. Appareil (1) selon l'une des revendications 1 à 6 **caractérisé en ce que** le récipient (2) comporte un fond (2A) à partir duquel s'élève la paroi latérale (2B), ledit fond (2A) présentant sensiblement une forme de disque de rayon (R1), ladite section évasée (20) présentant un rayon de courbure (R3) au moins égal à la moitié du rayon (R1) dudit disque formant le fond (2A), le rayon (R1) dudit disque étant préférentiellement compris entre 50 et 150 mm, tandis que ledit rayon de courbure (R3) est préférentiellement au moins égal à 40 mm.

8. Appareil (1) selon l'une des revendications 1 à 7 **caractérisé en ce qu'**il comprend une protubérance (10) qui fait saillie de la paroi latérale (2B) vers l'intérieur du récipient (2), ladite protubérance (10) s'étendant au moins en partie en regard de la section évasée et étant destinée à entrer en contact avec au moins une partie des aliments, de façon à prévenir l'accumulation contre la pale (3) d'un bloc d'aliments qui ne se déplacent sensiblement pas les uns relativement aux autres, ladite protubérance (10) présentant de préférence une forme sensiblement allongée et s'étendant de préférence sur au moins la majorité de la hauteur (H) de la paroi latérale (2B).

9. Appareil (1) selon l'une des revendications 1 à 8 **caractérisé en ce que** ledit moyen de soulèvement (3A) comporte un pan incliné (30) conçu pour que les aliments glissent dessus sous l'effet du mouvement relatif de rotation, ledit pan incliné (30) présentant de préférence une diminution de son aire en direction de l'arrière relativement au sens de déplacement de la pale (3) par rapport au récipient (2), pour favoriser le basculement vers l'intérieur du récipient (2) des aliments glissant sur et le long dudit pan incliné (30).

10. Appareil (1) selon l'une des revendications 1 à 9 **caractérisé en ce que** la pale (3) comprend un moyen (11) pour repousser les aliments en direction du moyen de soulèvement (3A), sous l'effet du mouvement relatif de rotation.

11. Appareil (1) selon la revendication 10 **caractérisé en ce que** ledit moyen (11) pour repousser les aliments en direction du moyen de soulèvement (3A) comporte un déflecteur frontal (11A) présentant un bord d'attaque fuyant en direction du moyen de soulèvement.

12. Appareil (1) selon l'une des revendications 1 à 11 **caractérisé en ce que** la pale (3) comprend un moyeu (9) ainsi qu'au moins un premier bras (12) s'étendant entre une première extrémité (12A) solidaire du moyeu (9) et une deuxième extrémité (12B) solidaire du moyen de soulèvement (3A).

13. Appareil (1) selon les revendications 11 et 12 **caractérisé en ce que** le déflecteur frontal (11A) est solidaire dudit premier bras (12) et s'étend entre lesdites première et deuxième extrémités (12A, 12B), ledit déflecteur frontal (11A) étant de préférence tel que son aire diminue de la première extrémité (12A) vers la deuxième extrémité (12B).

14. Appareil (1) selon l'une des revendications 1 à 13 **caractérisé en ce qu'**il comprend un corps principal (4) au sein duquel le récipient (2) est monté immobile, la pale (3) étant montée mobile en rotation relativement au récipient (2) et au corps principal (4).

15. Appareil (1) selon l'une des revendications 1 à 14 **caractérisé en ce qu'**il constitue une friteuse à cuisson sèche, le récipient (2) et la pale (3) formant un moyen pour enduire automatiquement les aliments d'une pellicule de matière grasse par brassage desdits aliments avec de la matière grasse.

## Patentansprüche

1. Kochgerät (1) für Nahrungsmittel, umfassend einerseits einen Behälter (2), der dazu bestimmt ist, die Nahrungsmittel zu enthalten, und umfassend eine Seitenwand (2B), und andererseits eine Rührklinge (3), wobei der Behälter (2) und die Rührklinge (3) derart ausgeführt sind, dass sie eine relative Drehbewegung entlang einer Drehachse (X-X') ausführen, um die Nahrungsmittel in dem Behälter (2) umzurühren, wobei die Rührklinge (3) einerseits ein Hubmittel (3A), das derart ausgeführt ist, dass es unter der Wirkung der relativen Drehbewegung die Nahrungsmittel, mit denen es in Kontakt kommt, hebt, und andererseits ein Mittel (11) umfasst, um die Nahrungsmittel in Richtung des Hubmittels (3A) unter der Wirkung der relativen Drehbewegung zurückzuschieben, wobei das Gerät (1) **dadurch gekennzeichnet ist, dass** die Seitenwand (2B) mindestens einen erweiterten Querschnitt (20) umfasst, und dass sich das Hubmittel (3A) zumindest teilweise senkrecht zu dem erweiterten Querschnitt erstreckt, um die senkrecht zu dem erweiterten Querschnitt (20) vorhandenen Nahrungsmittel zu heben, und dass die jeweiligen Projektionen des Hubmittels (3A) und des erweiterten Querschnitts (20) in einer selben Ebene parallel zur Drehachse (X-X') zumindest teilweise übereinander liegend sind.

2. Gerät (1) nach Anspruch 1, **dadurch gekennzeichnet, dass** sich das Hubmittel (3A) senkrecht zum erweiterten Querschnitt (20) auf zumindest im Wesentlichen einem Drittel seiner Fläche, die dem Behälter (2) gegenüberliegt, erstreckt, wobei sich das Hubmittel (3A) vorzugsweise im Wesentlichen mehrheitlich senkrecht zu dem erweiterten Querschnitt erstreckt.

3. Gerät (1) nach einem der Ansprüche 1 und 2, **dadurch gekennzeichnet, dass** sich das Hubmittel (3A) zumindest teilweise über dem erweiterten Querschnitt (20) vorstehend erstreckt.

4. Gerät (1) nach einem der Ansprüche 1 bis 3, **dadurch gekennzeichnet, dass** sich der erweiterte Querschnitt (20) auf zumindest der Mehrheit der Höhe (H) der Seitenwand (2B) erstreckt.

5. Gerät (1) nach einem der Ansprüche 1 bis 4, **dadurch gekennzeichnet, dass** der erweiterte Querschnitt (20) eine im Wesentlichen gekrümmte Form aufweist.

6. Gerät (1) nach einem der Ansprüche 1 bis 5, **dadurch gekennzeichnet, dass** der Behälter (2) einen Boden (2A) umfasst, von dem aus sich die Seitenwand (2B) erhebt, wobei sich der Boden (2A) vorzugsweise im Wesentlichen horizontal erstreckt, wobei sich der erweiterte Querschnitt (20) vom Boden (2A) aus erstreckt, wobei die Verbindung zwischen dem Boden (2A) und dem erweiterten Querschnitt (20) eine im Wesentlichen regelmäßige Krümmung aufweist, wobei die Seitenwand (2B) vorzugsweise einen Endabschnitt (21) von im Wesentlichen zylindrischer Form umfasst, der sich von dem erweiterten Querschnitt (20) bis zu einem freien Rand (2C) erstreckt.

7. Gerät (1) nach einem der Ansprüche 1 bis 6, **dadurch gekennzeichnet, dass** der Behälter (2) einen Boden (2A) umfasst, von dem aus sich die Seitenwand (2B) erhebt, wobei der Boden (2A) im Wesentlichen eine Form einer Scheibe mit einem Radius (R1) aufweist, wobei der erweiterte Querschnitt (20) einen Krümmungsradius (R3) zumindest gleich der Hälfte des Radius (R1) der den Boden (2A) bildenden Scheibe aufweist, wobei der Radius (R1) der Scheibe vorzugsweise zwischen 50 und 150 mm beträgt, während der Krümmungsradius (R3) vorzugsweise mindestens gleich 40 mm ist.

8. Gerät (1) nach einem der Ansprüche 1 bis 7, **dadurch gekennzeichnet, dass** es einen Vorsprung (10) umfasst, der aus der Seitenwand (2B) zum Inneren des Behälters (2) hervorragt, wobei sich der Vorsprung (10) zumindest teilweise gegenüber dem erweiterten Querschnitt erstreckt und dazu bestimmt ist, mit mindestens einem Teil der Nahrungsmittel in Kontakt zu kommen, um die Anhäufung eines Klumpens von Nahrungsmitteln, die sich im Wesentlichen nicht zueinander bewegen, an der Rührklinge (3) zu vermeiden, wobei der Vorsprung (10) vorzugsweise eine im Wesentlichen längliche Form aufweist, die sich vorzugsweise auf zumindest der Mehrheit der Höhe (H) der Seitenwand (2B) erstreckt.

9. Gerät (1) nach einem der Ansprüche 1 bis 8, **dadurch gekennzeichnet, dass** das Hubmittel (3A) eine geneigte Ebene (30) umfasst, die derart ausgeführt ist, dass die Nahrungsmittel unter der Wirkung der relativen Drehbewegung darüber gleiten, wobei die geneigte Ebene (30) vorzugsweise eine Verringerung ihrer Fläche in Richtung von hinten zur Bewegungsrichtung der Rührklinge (3) in Bezug zum Behälter (2) aufweist, um das Kippen der auf und entlang der geneigten Ebene (30) gleitenden Nahrungsmittel in das Innere des Behälters (2) zu begünstigen.

10. Gerät (1) nach einem der Ansprüche 1 bis 9, **dadurch gekennzeichnet, dass** die Rührklinge (3) ein Mittel (11) umfasst, um die Nahrungsmittel in Richtung des Hubmittels (3A) unter der Wirkung der relativen Drehbewegung zurückzuschieben.

11. Gerät (1) nach Anspruch 1, **dadurch gekennzeichnet, dass** das Mittel (11) zum Zurückschieben der Nahrungsmittel in Richtung des Hubmittels (3A) ein vorderes Ablenkblech (11A) umfasst, das einen Angriffsrand aufweist, der in Richtung des Hubmittels fliehend ist.

12. Gerät (1) nach einem der Ansprüche 1 bis 11, **dadurch gekennzeichnet, dass** die Rührklinge (3) eine Nabe (9) sowie mindestens einen ersten Arm (12), der sich zwischen einem ersten Ende (12A), das mit der Nabe (9) verbunden ist, und einem zweiten Ende (12B), das mit dem Hubmittel (3A) verbunden ist, erstreckt, umfasst.

13. Gerät (1) nach den Ansprüchen 11 und 12, **dadurch gekennzeichnet, dass** das vordere Ablenkblech (11A) mit dem ersten Arm (12) verbunden ist und sich zwischen dem ersten und dem zweiten Ende (12A, 12B) erstreckt, wobei das vordere Ablenkblech (11A) vorzugsweise derart ist, dass sich seine Fläche vom ersten Ende (12A) zum zweiten Ende (12B) hin verringert.

14. Gerät (1) nach einem der Ansprüche 1 bis 13, **dadurch gekennzeichnet, dass** es einen Hauptkörper (4) umfasst, in dem der Behälter (2) unbeweglich montiert ist, wobei die Rührklinge (3) in Bezug zum Behälter (2) und zum Hauptkörper (4) drehbeweglich montiert ist.

15. Gerät (1) nach einem der Ansprüche 1 bis 14, **dadurch gekennzeichnet, dass** es eine Trockengarfriteuse darstellt, wobei der Behälter (2) und die Rührklinge (3) ein Mittel bilden, um die Nahrungsmittel automatisch mit einer Fettschicht durch Durchmischen der Nahrungsmittel mit dem Fett zu versehen.

## Claims

1. A food cooking appliance (1) comprising, on the one hand, a bowl (2) for containing said food and having a side wall (2B), and on the other hand, a blade (3), said bowl (2) and blade (3) being designed so as to be animated by a relative rotational movement about an axis of rotation (X-X') in order to stir the food in the bowl (2), said blade (3) comprising, on the one hand, a lifting means (3A) configured so as to lift, under the effect of the relative rotational movement, the food with which it enters into contact, and on the other hand, a means (11) for pushing the food toward the lifting means (3A), under the effect of the relative rotational movement, said appliance (1) being **characterized in that** said side wall (2B) comprises at least one flared section (20), **in that** the lifting means (3A) extends at least in part plumb with the flared section so as to lift the food that is plumb with the flared section (20), and **in that** the respective projections of the lifting means (3A) and the flared section (20) in a same plane parallel to the axis of rotation (X-X') overlap each other at least in part.

2. An appliance (1) according to claim 1, **characterized in that** the lifting means (3A) extends plumb with the flared section (20) over at least substantially one third of the surface thereof facing the bowl (2), said lifting means (3A) preferably extending substantially in the majority plumb with the flared section.

3. An appliance (1) according to anyone of claims 1 to 2, **characterized in that** the lifting means (3A) overhangs at least partially above the flared section (20).

4. An appliance (1) according to anyone of claims 1 to 3, **characterized in that** said flared section (20) extends over at least most of the height (H) of the side wall (2B).

5. An appliance (1) according to anyone of claims 1 to 4, **characterized in that** said flared section (20) has a substantially curved shape.

6. An appliance (1) according to anyone of claims 1 to 5, **characterized in that** the bowl (2) comprises a bottom (2A) from which the side wall (2B) rises, said bottom (2A) extending preferably substantially horizontally, the flared section (20) extending from the bottom (2A), the junction between said bottom (2A) and flared section (20) having a substantially regular curvature, said side wall (2B) also comprising preferably a terminal section (21) substantially cylindrical in shape, which extends from the flared section (20) up to a free edge (2C).

7. An appliance (1) according to anyone of claims 1 to 6, **characterized in that** the bowl (2) comprises a bottom (2A) from which the side wall (2B) rises, said bottom (2A) having substantially a disk shape, with a radius of curvature (R1), said flared section (20) having a radius of curvature (R3) at least equal to half the radius (R1) of said disk forming the bottom (2A), the radius (R1) of said disk being preferably comprised between 50 and 150 mm, whereas said radius of curvature (R3) is preferably at least equal to 40 mm.

8. An appliance (1) according to anyone of claims 1 to 7, **characterized in that** it comprises a protrusion (10) that protrudes from the side wall (2B) toward the inside of the bowl (2), said protrusion (10) extending at least in part opposite the flared section (20) and being intended to enter into contact with at least a part of the food, so as to prevent the accumulation against the blade (3) of a block of food pieces that substantially do not move with respect to each other, said protrusion (10) having preferably a substantially elongated shape and extending preferably over at least most of the height (H) of the side wall (2B).

9. An appliance (1) according to anyone of claims 1 to 8, **characterized in that** said lifting means (3A) comprises an inclined face (30) designed so that the food slide above it under the effect of the relative rotational movement, said inclined face (30) having preferably a surface area that reduces rearward relative to the moving direction of the blade (3) with respect to the bowl (2), in order to favor the falling over toward the inside of the bowl (2) of the food sliding on and along said inclined face (30).

10. An appliance (1) according to anyone of claims 1 to 9, **characterized in that** the blade (3) comprises a means (11) for pushing the food toward the lifting means (3A), under the effect of the relative rotational movement.

11. An appliance (1) according to claim 10, **characterized in that** said means (11) for pushing the food toward the lifting means (3A) comprises a front deflector (11A) having a leading edge that vanishes in the direction of the lifting means.

12. An appliance (1) according to anyone of claims 1 to 11, **characterized in that** the blade (3) comprises a hub (9) as well as a first arm (12) extending between a first end (12A) integral with the hub (9) and a second end (12B) integral with the lifting means (3A).

13. An appliance (1) according to claims 11 and 12, **characterized in that** the front deflector (11A) is integral with said first arm (12) and extends between said first and second ends (12A, 12B), said front deflector (11A) being preferably such that its surface area decreases from the first end (12A) toward the second end (12B).

14. An appliance (1) according to anyone of claims 1 to 13, **characterized in that** it comprises a main body (4) within which the bowl (2) is fixedly mounted, the blade (3) being rotatably mounted relative to the bowl (2) and to the main body (4).

15. An appliance (1) according to anyone of claims 1 to 14, **characterized in that** it is a dry-cooking fryer, the bowl (2) and the blade (3) forming means for automatically coating the food with a film of fat by mingling said food with the fat.
